Europäisches Patentamt

European Patent Office

Office européen des brevets

(19)

(11) Numéro de publication : **0 236 368
B1**

# (12) FASCICULE DE BREVET EUROPÉEN

(45) Date de publication du fascicule du brevet :
**11.01.89**

(21) Numéro de dépôt : **86905182.1**

(22) Date de dépôt : **05.09.86**

(86) Numéro de dépôt international :
**PCT/CH 86/00126**

(87) Numéro de publication internationale :
**WO/8701333 (12.03.87 Gazette 87/06)**

(51) Int. Cl.⁴ : **B 23 Q   7/04,** B 24 B 27/00,
B 25 J 21/00, B 23 Q 11/08

---

(54) MACHINE DE FINISSAGE DE PIECES MOULEES OU USINEES.

(30) Priorité : **06.09.85 CH 3844/85**

(43) Date de publication de la demande :
**16.09.87 Bulletin 87/38**

(45) Mention de la délivrance du brevet :
**11.01.89 Bulletin 89/02**

(84) Etats contractants désignés :
**AT BE CH DE FR GB IT LI LU NL SE**

(56) Documents cités :
**DD--A--   221 955
DE--A-- 2 934 066
FR--A-- 2 458 363**
Technische Rundschau, vol. 76. no. 12, 20 mars 1984,
Berne (CH), D. Hilti et al.: "Entgraten mit dem Roboter", pp. 12,13
ZWF, Zeitschrift für Wirtschaftliche Fertigung, vol. 79,
no. 7, Juillet 1984, Freising (DE), D. Hilti et al.:
"Flexibles Entgraten mit Industrierobotern", pp. 311-
315
Tooling and Production, vol. 50, no. 1, avril 1984,
Solon, Ohio (US), E.E. Sprow: "Robot vision adds
flexibility to finishing", pp. 70-72
VDI-Zeitschrift, vol. 127, no. 7, avril 1985, Düsseldorf
(DE), W. Kreis et al.: "Montage- und Handhabungstechnik Industrieroboter", pp. 221-230
VDI-Zeitschrift, vol. 127, no. 3, février 1985, Düsseldorf
(DE), "Ein reaktionsschneller Montageroboter", p. 70
Werkstatt und Betrieb, vol. 105, no. 4, avril 1972,
Munich (DE), K.H. Korte: "Schneidemaschine für
unklaren Brennstoff", pp. 285-287

(73) Titulaire : **BULA & FILS S.A.
Treize-Cantons
CH-1599 Henniez (CH)**

(72) Inventeur : **BULA, Bernard
Aux Vagnaires
CH-1522 Curtilles (CH)**

(74) Mandataire : **Nithardt, Roland
CABINET ROLAND NITHARDT Attn: Cabinet MOSER
& CIE Rue Edouard Verdan 15
CH-1400 Yverdon-les-Bains (CH)**

## Description

La présente invention concerne une machine de finissage de pièces moulées ou usinées, notamment d'ébavurage, et/ou de brossage, et/ou de ponçage, et/ou de polissage, et/ou de meulage de ces pièces, comportant une enceinte fermée, au moins une unité de finissage équipée d'un outil de finissage de ces pièces, un robot manipulateur programmable agencé pour présenter au moins une surface de chaque pièce brute à cet outil de finissage, dans au moins une orientation déterminée en vue de la soumettre à au moins une opération de finissage.

Les machines de finissage, couramment utilisées actuellement, comportent habituellement une table tournante portant des pièces à finir et des satellites disposés autour de cette table constituant les unités de finissage. Les pièces brutes sont mises en place sur la table tournante par un poste d'entrée manuel ou automatique, sont successivement présentées aux différentes unités de finissage puis sont retirées de la table par un poste de reprise. Le nombre de pièces montées sur la table est égal au nombre d'unités de finissage satellites, de sorte qu'à chaque pas de la table tournante, toutes les pièces portées par la table sont simultanément traitées par une autre unité de finissage. Après une rotation complète de la table tournante, toutes les pièces sont passées successivement devant toutes les unités de finissage.

Ce dispositif, connu par son efficacité et sa rapidité, est très utile dans de nombreux cas. Toutefois, certaines pièces présentent des formes compliquées, des surfaces gauches, des rebords ou des épaulements etc., et les machines connues ne permettent pas leur finissage dans les diverses unités de finissage satellites. Les supports mobiles des pièces, montés sur la table tournante, ne présentent pas une mobilité suffisante, n'autorisent pas le déplacement des pièces selon un nombre de degrés de liberté suffisant et ne peuvent pas présenter les pièces sous des orientations suffisamment diverses pour assurer un finissage complet des pièces aux formes tourmentées, au cours d'un seul cycle de la machine ou par une seule préhension de ces pièces. En outre, les supports mobiles des pièces, ainsi que les organes de commande de ces supports, cames, cycles pneumatiques etc., sont construits en fonction de la forme des pièces et des déplacements qu'il est nécessaire de leur imposer pour les amener en contact avec les unités de finissage sélectionnées pour obtenir le traitement de surface choisi. Il en résulte que, pour chaque type de pièce, l'utilisateur doit concevoir un support et des organes de commande appropriés, ce qui enchérit considérablement le coût du traitement des pièces fabriquées, notamment celles qui sont réalisées en relativement petites séries.

En conséquence, ces machines sont parfaitement valables pour le finissage de pièces aux formes simples fabriquées en grandes séries, mais présentent un intérêt moindre pour les petites séries en raison précisément du coût élevé de l'étude et de la réalisation de supports spécifiques adaptés à ces pièces. En outre, les pièces compliquées ne peuvent pas être traitées par ces machines connues.

Pour pallier ces inconvénients, on a développé des centres de finissage comportant un robot manipulateur programmable agencé pour présenter des pièces à usiner à un certain nombre d'unités de finissage. Les centres de finissage connus comportent toutefois un robot manipulateur central posé sur un support fixe et les unités de finissage sont elles-mêmes montées sur des supports fixes disposés autour du robot manipulateur.

Le type de robot manipulateur utilisé ne comporte qu'un nombre relativement restreint de degrés de liberté et ne permet pas d'amener en contact avec les outils de finissage, des objets aux formes particulièrement complexes. En outre, une surveillance régulière est indispensable pour permettre à un opérateur d'ajuster les unités de finissage en position, en fonction de l'usure des outils de finissage.

La présente invention se propose d'apporter un remède à tous les inconvénients mentionnés ci-dessus en réalisant une machine de finissage universelle, susceptible d'assurer de façon économique le finissage de pièces fabriquées en petites séries, en particulier de pièces aux formes complexes.

Dans ce but, la machine selon l'invention est caractérisée en ce que le robot manipulateur est du type pendulaire à au moins six axes et est monté au haut de l'enceinte fermée, et en ce que l'unité de finissage est équipée d'un dispositif de compensation automatique de l'usure de l'outil de finissage.

Selon un mode de réalisation préféré, le dispositif de compensation automatique de l'usure de l'outil de finissage comporte un support mobile sur lequel est monté l'outil de finissage, un organe détecteur de l'usure de cet outil, un organe moteur lié au support mobile pour assurer son déplacement et des moyens pour commander le déplacement de ce support mobile en fonction de l'usure de l'outil de finissage.

Selon un mode de réalisation particulièrement intéressant, l'organe détecteur de l'usure de l'outil de finissage est un compteur agencé pour compter le nombre de pièces soumises à l'opération de finissage au moyen dudit outil et les moyens pour commander le déplacement du support mobile sont agencés pour activer l'organe moteur lié à ce support lorsque le nombre de pièces traitées a atteint une valeur prédéterminée.

Selon un autre mode de réalisation également très avantageux, l'organe détecteur de l'usure de l'outil de finissage est agencé pour mesurer l'intensité du courant d'alimentation d'un moteur électrique d'entraînement de cet outil et les moyens pour commander le déplacement du support mobile sont agencés pour activer l'organe moteur lié à ce support lorsque une baisse d'intensité de ce courant d'alimentation est détectée.

Le support mobile de l'outil de finissage comporte de préférence au moins une coulisse agencée pour déplacer cet outil selon un premier axe, et l'organe moteur lié au support mobile comporte de préférence un moteur électrique entraînant une vis engagée dans un écrou fixe solidaire d'un socle fixe liée à l'enceinte.

Le support mobile de l'outil de finissage peut également comporter une colonne agencée pour déplacer cet outil selon un second axe perpendiculaire audit premier axe.

La colonne agencée pour déplacer l'outil selon ledit second axe est de préférence associée à un premier moteur électrique destiné à déplacer ledit outil selon ledit second axe et à un second moteur électrique agencé pour déplacer ledit outil en rotation autour de cet axe.

Selon un mode de réalisation préféré, la machine comporte plusieurs unités de finissage et chaque unité de finissage est associée à un dispositif d'aspiration des poussières. Par ailleurs, la machine comporte avantageusement au moins une unité de contrôle de l'état de la surface des pièces après leur traitement par les différentes unités de finissage. Cette unité de contrôle peut être constituée par un spectromètre ou tout autre appareil approprié.

Dans le cas où l'unité de finissage ou une de unités de finissage de la machine est constituée par une unité de ponçage à bande abrasive, cette bande est de préférence soutenue par deux galets de guidage et d'appui d'axes parallèles, dont chacun est pourvu d'une couche de revêtement de dureté déterminée. En outre, dans ce cas, l'unité de ponçage peut comporter au moins un sabot d'appui rigide plan ou courbe monté à l'arrière de la bande abrasive. Ces mesures permettent d'obtenir des surfaces d'appui très différentes en fonction du résultat que l'on souhaite obtenir.

Selon un autre mode de réalisation, la machine comporte au moins une unité de polissage qui est de préférence équipée d'au moins un pistolet d'éjection de pâte à polir associé à un organe de réglage de la quantité de pâte éjectée à chaque jet et pourvue de moyens de commande agencés pour définir la fréquence des jets de pâte émis par ce pistolet.

Dans ce cas, les moyens de commande agencés pour définir la fréquence des jets sont avantageusement incorporés dans une centrale de traitement des données contenant le programmateur du robot manipulateur programmable et les moyens pour commander les supports mobiles des outils de finissage.

La présente invention sera mieux comprise en référence à la description d'une forme de réalisation particulière présentée à titre d'exemple non limitatif, et au dessin annexé dans lequel :

La figure 1 représente une vue schématique frontale en élévation de la machine de finissage selon l'invention,

La figure 2 représente une vue schématique latérale en élévation de la machine de finissage illustrée par la fig. 2,

La figure 3 représente une vue partielle en coupe selon la ligne A-A de la fig. 1.

La figure 4 représente une vue en perspective d'une forme de réalisation particulière de la machine de finissage selon l'invention,

La figure 5 représente une vue schématique en perspective du robot manipulateur monté au haut de l'enceinte.

La figure 6 représente une vue schématique partielle d'une unité de ponçage pouvant être montée à l'intérieur de l'enceinte,

La figure 7A représente une vue latérale en élévation d'une unité de polissage pouvant être montée à l'intérieur de l'enceinte de la machine selon l'invention,

La figure 7B représente une vue frontale en élévation de l'unité de ponçage illustrée par la fig. 7A, et

La figure 8 représente une vue illustrant le principe de la compensation de l'usure des outils de finissage mis en application sur la machine selon l'invention.

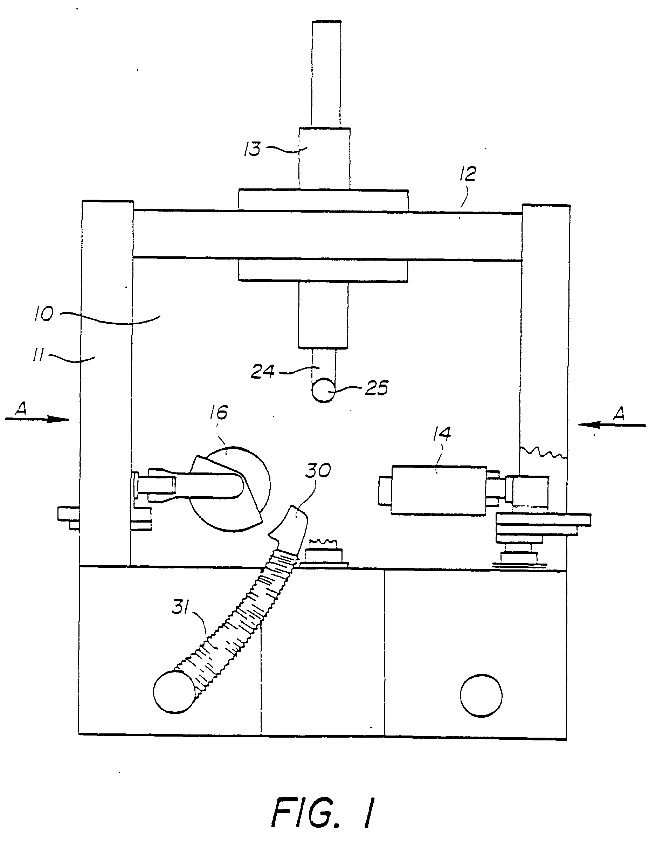

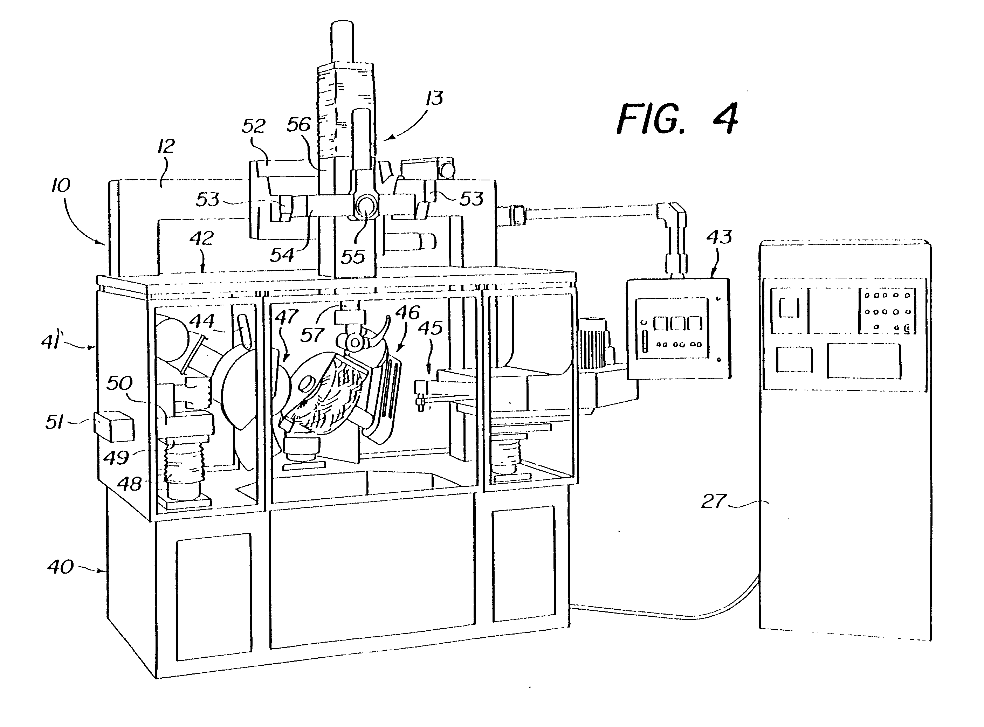

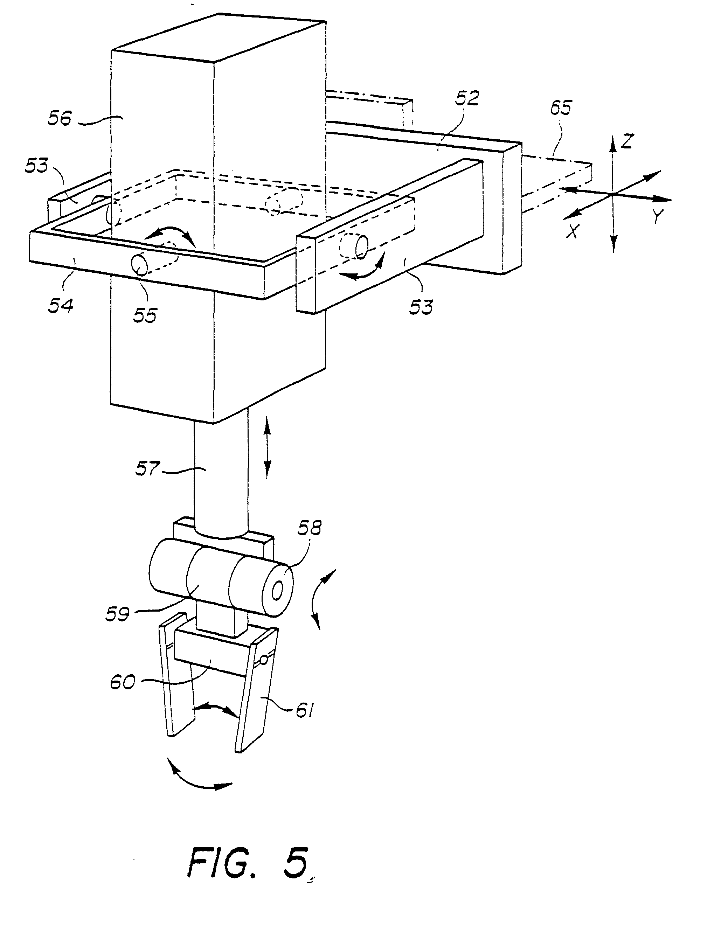

En référence aux figures 1 à 4, la machine de finissage représentée comporte essentiellement une enceinte fermée 10 réalisée par exemple au moyen d'un châssis comprenant par exemple deux colonnes 11 verticales reliées par une poutre transversale 12 servant à supporter le robot manipulateur programmable 13 monté au haut de l'enceinte 10. Ce robot manipulateur est du type pendulaire à au moins six axes. Ce nombre peut être étendu à neuf pour augmenter la flexibilité du système en accroissant les dimensions de l'espace accessible par le bras manipulateur de ce robot. Celui-ci sera décrit plus en détail en référence aux figures 4 et 5.

Comme le montre plus particulièrement la figure 3, la machine de finissage décrite comporte trois unités de finissage 14, 15 et 16 destinées chacune à effectuer une opération différente sur les pièces brutes à traiter. L'unité de finissage 14 est, dans ce cas, une ponceuse à bande équipée d'une toile émeri 17 entraînée en rotation autour d'un galet de guidage 18 d'axe vertical. L'unité de finissage 15 est une unité de brossage équipée d'une brosse 19 d'axe vertical, du type brosse métallique ou à fibres abrasives. L'unité de finissage 16 est, dans ce cas, constituée par une polisseuse comportant une brosse à polir 20 d'axe horizontal, de préférence associée à un distributeur automatique 21 de pâte à polir.

Le nombre et la nature des différentes unités de finissage peuvent être variés à volonté en fonction des opérations que l'on doit faire subir à une pièce pour que sa surface atteigne l'état désiré. Les unités de ponçage au moyen de toile émeri, de brossage et/ou de polissage pourraient être remplacées par différentes autres unités telles que par exemple une unité d'ébavurage comportant un outil de coupe rotatif, une unité de meulage etc. On pourrait également envisager d'équiper toute la machine de différentes unités de polissage pourvues de brosses à polir respectivement associées à des distributeurs de pâte à polir de plus en plus fine permettant d'obtenir, par approche successive, le fini de surface requis pour la pièce considérée.

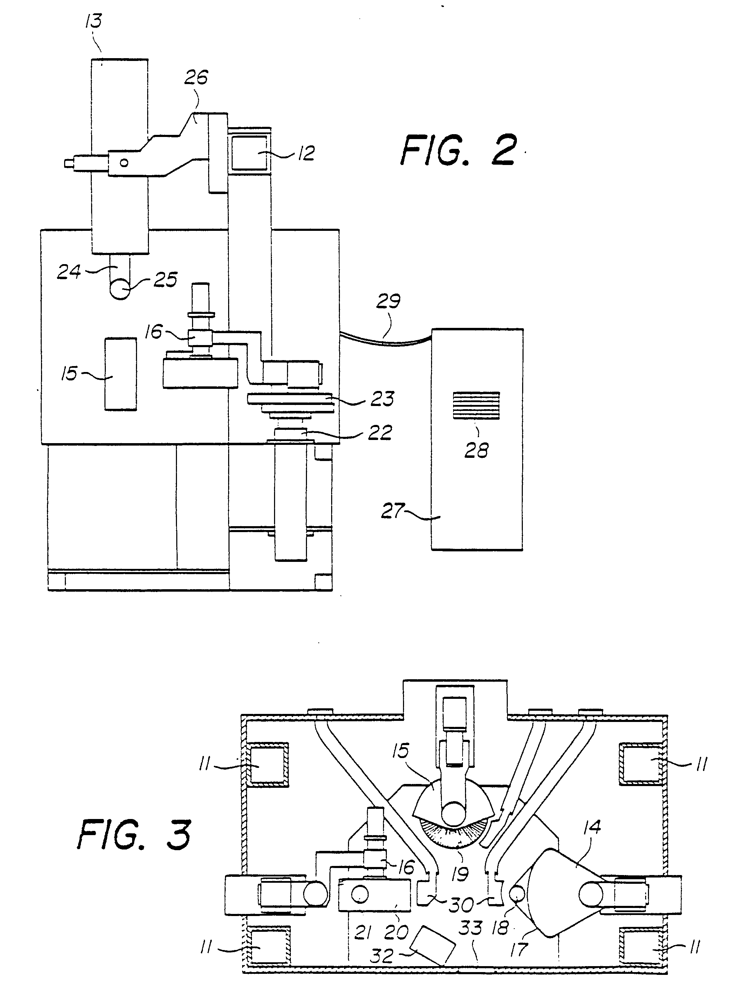

En référence à la fig. 2, chaque unité de finissage est portée par un support mobile composé d'une colonne télescopique 22, par exemple du type à vis, qui supporte une coulisse 23 susceptible de se déplacer dans un plan horizontal. Selon une forme de réalisation particulière, la coulisse est pivotante par rapport à l'axe de la colonne. Selon un autre mode de réalisation, le support de l'unité de finissage est rotatif par rapport à la coulisse. Dans les deux cas, l'unité de finissage peut être ajustée en hauteur, selon un axe vertical, en position angulaire dans un plan horizontal et en translation selon un axe horizontal. En d'autres termes, chaque unité de finissage est ajustable en position en fonction de la pièce à traiter.

Selon un variante qui sera décrite par la suite, chaque unité de finissage est montée sur un support mobile commandé par un détecteur d'usure de l'outil de finissage.

Le robot manipulateur 13 est au haut de l'enceinte 10 de telle manière que son bras manipulateur 24, terminé par un organe de préhension 25 du type mandrin de serrage, pince hydraulique, pneumatique ou mécanique, électro-aimant, etc., puisse amener les pièces à traiter en contact avec les outils des différentes unités de finissage. Dans ce but, le robot, du type pendulaire, est avantageusement monté de façon centrale par rapport aux unités de finissage disposées autour de la zone d'accès du bras manipulateur 24. Ce robot est articulé selon deux axes perpendiculaires sur une potence 26 portée par la poutre transversale 12. Les déplacements du bras manipulateur sont programmés au moyen d'une unité de commande programmable, logée dans une armoire 27, équipée par exemple d'une console de programmation 28 et reliée au robot par un câble de liaison 29.

A chaque unité de finissage est associé un dispositif d'aspiration (voir figure 1) comportant une tête d'aspiration 30 connectée, par un conduit flexible 31, à une installation d'aspiration non représentée. Comme les unités de finissage sont logées dans l'enceinte fermée et comme cette enceinte est équipée de moyens destinés à aspirer la poussière et les déchets, l'atmosphère à l'intérieur de l'enceinte et, à fortiori, l'atmosphère environnante sont maintenues parfaitement propres. Il en résulte que la machine de finissage décrite peut être placée sans risques dans n'importe quel atelier, voire dans un laboratoire ou un environnement propre constitue une exigence fondamentale.

Pour assurer un contrôle de l'état de surface obtenu à la fin de l'opération de finissage, la machine décrite peut comporter, comme le montre par exemple la figure 3, un organe de contrôle 32. Cet organe de contrôle peut être un spectromètre. Il peut être conçu pour fournir un signal au robot manipulateur afin qu'il sélectionne automatiquement les pièces finies répondant aux exigences en matière d'état de surface et sépare celles qui ne répondent pas à ces exigences.

Pour permettre la prise en charge des pièces brutes amenées par un organe de transfert (non représenté) ou placées dans un organe de stockage approprié, l'enceinte comporte avantageusement une fenêtre 33 à travers laquelle le bras manipulateur peut passer.

La machine de finissage décrite ci-dessus présente de multiples avantages et permet de finir de façon soignée des pièces d'une grande complexité de forme telles que, par exemple, des aubes de turbines qu'il est, impossible de traiter au cours d'un cycle unique par une machine traditionnelle, ou des éléments de prothèse tels que des genoux, des hanches, des mains artificielles ou des instruments chirurgicaux ou dentaires.

Le robot, dont le bras manipulateur peut se déplacer selon un nombre élevé (par exemple de six à neuf) degrés de liberté, permet de présenter les surfaces à traiter sous toutes les orientations possibles' et autorise des déplacements de ces pièces selon des trajectoires quelconques, pouvant être définies par une programmation effectuée par l'utilisateur lui-même.

Divers paramètres tels que la pression d'appui des pièces contre les surfaces actives des unités de finissage peuvent être contrôlés. Le temps d'action de chaque unité peut être commandé individuellement. On peut inclure dans le programme des commandes annexes telles que la pulvérisation de lubrifiants ou de pâte à polir, le remplacement d'outils usés ou défectueux. A ce propos, un détecteur d'usure pourrait être intégré à chaque unité de finissage pour libérer un signal approprié destiné à enclencher une opération de remplacement de l'outil usé. Un magasin de pièces de remplacement pourrait être monté à l'intérieur ou à l'extérieur de l'enceinte, dans la zone d'accès du bras manipulateur.

Comme le montre plus particulièrement la figure 4, l'enceinte 10 se compose en fait d'une armoire inférieure 40 contenant notamment l'alimentation électrique et différents éléments mécaniques, d'une partie supérieure 41 pouvant également être fermée notamment sur la face avant au moyen de panneaux vitrés et d'un toit 42, partiellement ouvert dans sa partie centrale pour permettre le passage du robot pendulaire programmable 13. Un boîtier de commande 43 est associé à l'enceinte 10 et assure la commande des unités de finissage. L'armoire 27 contient l'unité centrale de traitement des données permettant la programmation du robot manipulateur 13 et la transmission de diverses commandes pour assurer notamment les fonctions de compensation de l'usure de certains outils tels que les brosses et les fonctions d'alimentation des brosses de polissage avec de la pâte à polir.

Cette dernière fonction est assurée par l'intermédiaire de pistolets 44 commandés pneumatiquement à intervalles réguliers.

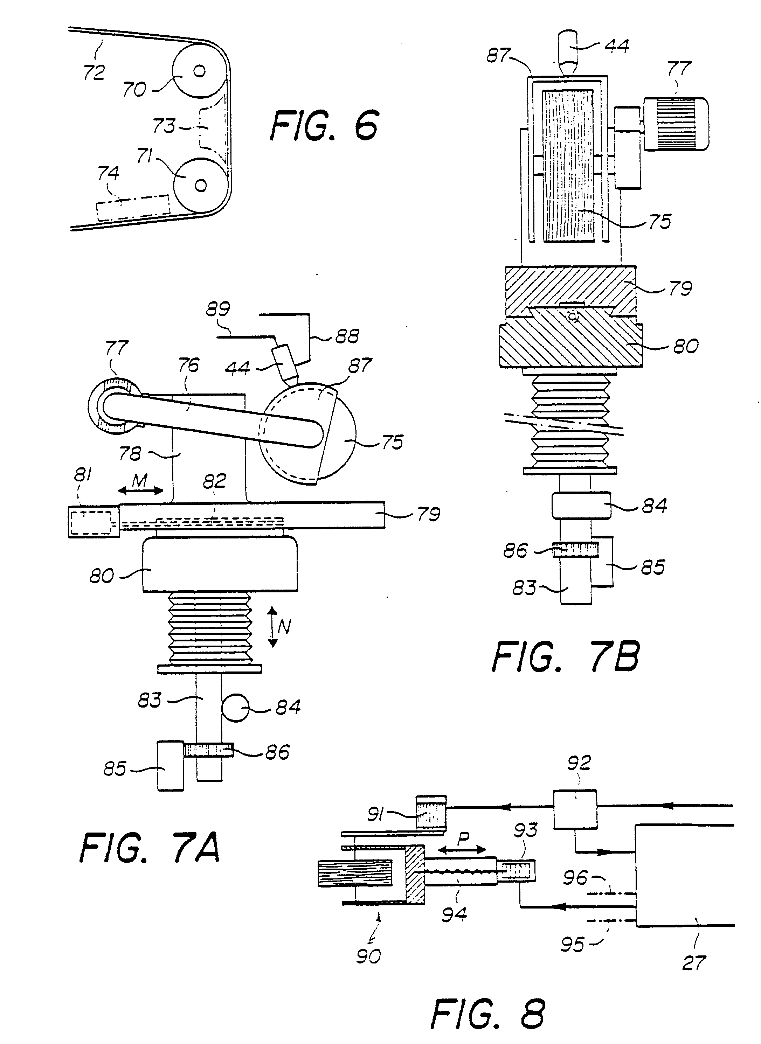

Dans l'exemple illustré, l'enceinte 10 contient une unité de ponçage 45, une unité de brossage 46 et une unité de polissage 47. Chacune de ces trois unités est de préférence montée sur un support mobile comportant une colonne télescopique 48, un support fixe 49, et une coulisse 50 pouvant être déplacée selon un axe déterminé au moyen d'un moteur 51. Les éléments mécaniques permettant d'assurer ces différents déplacements seront décrits plus en détail en référence aux figures 7A et 7B.

Le robot pendulaire 13 comporte avantageusement six axes de déplacement, mais ce nombre peut être porté à neuf pour augmenter les dimensions de la zone accessible par le bras manipulateur. Il se compose essentiellement d'un support 52 fixé rigidement à la poutre transversale 12 ou monté sur une plateforme 65 mobile selon trois axes orthogonaux X, Y, Z, tels que représentés schématiquement par la figure 5, ce support 52 portant deux bras parallèles 53 sur lesquels est articulé un berceau 54 portant un axe 55 sur lequel est articulé le corps 56 du robot 13. Une tige 57 est partiellement logée à l'intérieur du corps 56 et porte à son extrémité libre un élément cylindrique 58 pourvu d'un flasque rotatif 59 auquel est attaché le support 60 de deux pinces 61 commandées par un électro-aimant et susceptibles de s'ouvrir ou se fermer pour prendre en charge une pièce à traiter. Bien entendu que les pinces pourraient être remplacées par différents autres organes susceptibles de prendre en charge des pièces usinées ou moulées devant être amenées en contact avec les outils de finissage.

La figure 6 montre l'extrémité utile ou la tête d'une unité de ponçage comportant deux galets 70 et 71 sur lesquels tourne une bande 72 de ponçage constituée par exemple par une toile émeri. Ces deux galets cylindriques comportent avantageusement des revêtements superficiels de dureté différente ce qui permet de disposer de surfaces d'appui différentes et en conséquence de modifier le type de traitement que l'on fait subir aux pièces amenées en contact avec la bande 72 au niveau de l'un ou de l'autre des galets 70 et 71. Comme le montre la figure, des sabots d'appui 73 et 74 peuvent être prévus le long de la bande pour élargir la gamme des traitements possibles sur la même tête de ponçage.

Les figures 7A et 7B illustrent une unité de polissage comportant une brosse à polir 75 montée à l'extrémité d'un bras 76 portant également un moteur d'entraînement 77 couplé à la brosse 75 au moyen d'une courroie (non représentée). Cet ensemble est monté sur un support 78 solidaire d'une coulisse 79 mobile dans le sens de la double flèche M par rapport à un socle 80 grâce à un mécanisme comportant un moteur électrique 81 et une vis 82. Le socle 80 est monté sur une colonne 83 susceptible d'être déplacée dans le sens de la double flèche N au moyen d'un moteur 84 ou en rotation autour de l'axe de cette colonne au moyen d'un moteur électrique 85 couplé à une roue dentée 86. Comme le montre plus particulièrement la figure 7B, la coulisse 79 est du type connu à queue d'aigle. Ce mécanisme de déplacement du support mobile des unités de finissage est particulièrement utile pour équiper la machine d'un dispositif de rattrapage automatique de l'usure des outils de finissage.

Un pistolet éjecteur 44 de pâte à polir est monté sur le capot protecteur 87 de la brosse 75. Il est alimenté en pâte à polir par un conduit 88 et en air comprimé au moyen d'un conduit 89.

Comme le montre le schéma de la figure 8, une unité de finissage 90, qui peut par exemple être une unité de brossage ou de polissage dont la brosse est entraînée par un moteur d'entraînement 91, est associée à un dispositif de détection de l'usure de la brosse. Ce dispositif de détection comporte par exemple un circuit 92 de mesure de l'intensité du courant d'alimentation du moteur 91. Ce circuit de mesure 92 est couplé à l'unité centrale de traitement des données contenue dans l'armoire 27 de programmation. Cette unité centrale de traitement des données est liée à un moteur 93 qui commande le déplacement de la coulisse 94 dans le sens de la double flèche P. Deux autres sorties 95 et 96 peuvent être prévues dans le cas où le rattrapage de l'usure impose également le déplacement en hauteur ou en rotation d'une colonne telle que la colonne 83 des figures précédentes, supportant le socle fixe de l'unité de finissage.

Ce dispositif de rattrapage de l'usure peut également fonctionner selon un autre principe qui est celui du comptage du nombre de pièces traitées par l'unité de finissage. Dans ce cas, un compteur enregistre le nombre de pièces traitées par l'unité de finissage et l'unité centrale de traitement des données transmet à l'unité de finissage un signal de commande qui a pour effet de déplacer son support mobile dès que le nombre compté par le compteur atteint une valeur prédéterminée.

Pour que la vitesse superficielle des brosses ou des autres outils de finissage soit constante quelle que soit l'usure de cet outil, le circuit 92 comporte avantageusement un circuit qui permet d'accroître la vitesse d'entraînement de l'outil au fur et à mesure que son diamètre décroît.

Grâce au déplacement de l'outil et à l'accroissement de sa vitesse superficielle en même temps que diminue son diamètre en raison de son usure, on assure un traitement uniforme sur toutes les pièces en exerçant notamment des contraintes de pression régulières sur les surfaces traitées de toutes les pièces d'une même série. Cet avantage est particulièrement important du fait qu'il permet de supprimer toute intervention manuelle habituellement nécessaire pour compenser l'usure des outils de finissage.

La machine de finissage décrite peut être montée sur une ligne de fabrication, constituer une station de travail indépendante ou une station liée à une installation plus complexe destinée à effectuer un quelconque processus industriel. Par la combinaison des voies d'accès, plusieurs machines similaires peuvent être disposées en série ou en parallèle, selon les opérations à effectuer sur les pièces à traiter.

Dans la pratique, la machine de finissage décrite peut être adaptée à un nombre important de besoins, de sorte que son universalité est une de ses propriétés fondamentales.

## Revendications

1. Machine de finissage de pièces moulées ou usinées, notamment d'ébavurage, et/ou de brossage, et/ou de ponçage, et/ou de polissage, et/ou de meulage de ces pièces, comportant une enceinte fermée (10), au moins une unité de finissage (14, 15, 16 ; 90) équipée d'un outil de finissage (17, 72 ; 19 ; 20, 75) de ces pièces, un robot manipulateur (13) programmable agencé pour présenter au moins une surface de chaque pièce brute à cet outil de finissage, dans au moins une orientation déterminée en vue de la soumettre à au moins une opération de finissage, caractérisée en ce que le robot manipulateur (13) est du type pendulaire à au moins six axes et est monté au haut de l'enceinte fermée (10), et en ce que l'unité de finissage est équipée d'un dispositif de compensation automatique de l'usure de l'outil de finissage.

2. Machine selon la revendication 1, caractérisée en ce que le dispositif de compensation automatique de l'usure de l'outil de finissage comporte un support mobile sur lequel est monté l'outil de finissage, un organe détecteur de l'usure de cet outil, un organe moteur (93) lié au support mobile pour assurer son déplacement et des moyens pour commander le déplacement de ce support mobile en fonction de l'usure de l'outil de finissage.

3. Machine selon la revendication 2, caractérisée en ce que l'organe détecteur de l'usure de l'outil de finissage est un compteur agencé pour enregistrer le nombre de pièces soumises à l'opération de finissage au moyen dudit outil, et en ce que les moyens pour commander le déplacement du support mobile sont agencés pour activer l'organe moteur (93) lié à ce support, lorsque le nombre de pièces traitées a atteint un nombre prédéterminé.

4. Machine selon la revendication 2, caractérisée en ce que l'organe détecteur (92) de l'usure de l'outil de finissage est agencé pour mesurer l'intensité du courant d'alimentation d'un moteur électrique (91) d'entraînement de cet outil, et en ce que les moyens pour commander le déplacement du support mobile sont agencés pour activer l'organe moteur (93) lié à ce support lorsqu'une baisse de l'intensité de ce courant d'alimentation est détectée.

5. Machine selon la revendication 2, caractérisée en ce que le support mobile de l'outil de finissage comporte au moins une coulisse (94) agencée pour déplacer cet outil selon un premier axe et en ce que l'organe moteur lié au support mobile comporte un moteur électrique entraînant une vis engagée dans un écrou fixe solidaire d'un socle fixe (80) lié à l'enceinte.

6. Machine selon la revendication 2, caractérisée en ce que le support mobile de l'outil de finissage comporte une colonne (83) agencée pour déplacer cet outil selon un second axe perpendiculaire audit premier axe.

7. Machine selon la revendication 6, caractérisée en ce que la colonne agencée pour déplacer l'outil selon le second axe est associée à un premier moteur électrique (84) destiné à déplacer ledit outil selon le dedit second axe et à un second moteur électrique (85) agencé pour déplacer ledit outil en rotation autour de cet axe.

8. Machine selon la revendication 1, comportant plusieurs unités de finissage, caractérisée en ce que chaque unité de finissage est associée à un dispositif d'aspiration des poussières.

9. Machine selon la revendication 8, caractérisée en ce qu'elle comporte au moins une unité de contrôle (15) de l'état de la surface des pièces après leur traitement par les différentes unités de finissage.

10. Machine selon la revendication 9, caractérisée en ce que l'unité de contrôle est un spectromètre.

11. Machine selon la revendication 1, comportant au moins une unité de ponçage à bande abrasive, caractérisée en ce que cette unité comporte deux galets de guidage et d'appui d'axes parallèles, chacun de ces galets étant pourvu d'un revêtement de dureté déterminé.

12. Machine selon la revendication 11, caractérisée en ce que l'unité de ponçage comporte au moins un sabot d'appui rigide plan ou courbe, monté à l'arrière de la bande abrasive.

13. Machine selon la revendication 1, comportant au moins une unité de polissage, caractérisée en ce que cette unité de polissage est équipée d'au moins un pistolet (44) d'éjection de pâte à polir comportant un organe de réglage de la quantité de pâte éjectée à chaque jet et pourvue de moyens de commande agencés pour définir la fréquence des jets de pâte émis par le pistolet.

14. Machine selon la revendication 13, caractérisée en ce que les moyens de commande agencés pour définir la fréquence des jets sont incorporés dans une unité centrale de traitement des données contenant le programmateur du robot manipulateur programmable (13) et les moyens pour commander les déplacements des supports mobiles des outils de finissage.

## Claims

1. Machine for finishing molded or machined parts, particularly smoothing of rough edges, and/or brushing, and/or rubbing, and/or polishing, and/or grinding of these parts, comprising a closed chamber (10), at least one finishing unit (14, 15, 16 ; 90) equipped with a finishing tool (17, 72 ; 19 ; 20, 75) of these parts, a programmable manipulator robot (13) adapted to present at least one surface of each raw part to this finishing tool, in at least one predetermined orientation so as to subject it to at least one finishing operation, characterized in that the manipulator robot (13) is of the hanging type having at least six axes and is mounted at the top of the closed chamber (10), and in that the finishing unit is equipped with an automatic compensation apparatus for the wear of the finishing tool.

2. Machine according to claim 1, characterized in that the automatic compensation apparatus for the wear of the finishing tool comprises a movable support on which is mounted the finishing tool, a detector element of the wear of this tool, a motor element (93) connected to the movable support to assure its displacement and means to control the displacement of the movable support as a function of the wear of the finishing tool.

3. Machine according to claim 2, characterized in that the detector element of the wear of the finishing tool is a counter adapted to record the number of parts subjected to the finishing operation by means of the said tool, and in that the means to control the displacement of the movable support are adapted to activate the motor element (93) connected to this support, when the number of treated parts has reached a predetermined number.

4. Machine according to claim 2, characterized in that the detector element (92) of the wear of the finishing tool is adapted to measure the intensity of the feed current of an electric motor (91) for driving the tool, and in that the means for controlling the displacement of the movable support are adapted to activate the motor element (93) connected to this support when a drop in the intensity of this feed current is detected.

5. Machine according to claim 2, characterized in that the movable support of the finishing tool comprises at least one slide (94) adapted to displace this tool along a first axis and in that the motor element connected to the movable support comprises an electric motor driving a screw engaged in a nut integrally fixed to a fixed socket (80) connected to the chamber.

6. Machine according to claim 2, characterized in that the movable support of the finishing tool comprises a column (83) adapted to displace this tool along a second axis perpendicular to the said first axis.

7. Machine according to claim 6, characterized in that the column adapted to displace the tool along the second axis is associated with a first electric motor (84) adapted to displace the said tool along the said second axis and a second electric motor adapted to displace the said tool in rotation around this axis.

8. Machine according to claim 1, comprising a plurality of finishing units, characterized in that each finishing unit is associated with a dust aspiration apparatus.

9. Machine according to claim 8, characterized in that it comprises at least one control unit (15) of the state of the surface of the parts after their treatment by the different finishing units.

10. Machine according to claim 9, characterized in that the control unit is a spectrometer.

11. Machine according to claim 1, comprising at least one rubbing unit having an abrasive strip characterized in that this unit comprises two guide rollers and parallel support axes, each of these rollers being provided with a coating predetermined hardness.

12. Machine according to claim 11, characterized in that the rubbing unit comprises at least one rigid support shoe which is planar or curved, mounted at the rear of the abrasive strip.

13. Machine according to claim 1, comprising at least one polishing unit, characterized in that this polishing unit is equipped with at least one ejection pistol (44) of the polish paste comprising an element for adjusting the quantity of paste ejected at each jet and provided with control means adapted to define the frequency of the jets of paste emitted by the pistol.

14. Machine according to claim 13, characterized in that the control means adapted to define the frequency of the jets are incorporated in a central treatment unit of the data containing the programmer of the programmable manipulator robot (13) and the means to control the displacements of the movable supports of the finishing tools.

**Patentansprüche**

1. Endbearbeitungsmaschine für gegossene oder spanend hergestellte Werkstücke, insbesondere durch Entgraten und/oder Bürsten und/oder Schmirgeln und/oder Polieren und/oder Schleifen dieser Werkstücke, bestehend aus einer geschlossenen Box (10), mindestens einer Endbearbeitungseinheit (14, 15, 16 ; 90) ausgestattet mit einem Werkzeug zur Endbearbeitung (17, 72 ; 19 ; 20, 75) dieser Werkstücke, sowie einem programmierbaren manipulierbaren Roboter (13), der dazu bestimmt ist, mindestens eine rohe Oberfläche jeden Werkstückes diesem Endbearbeitungsvorgang in mindestens einer bestimmten Richtung zu mindestens einer Endbearbeitungsoperation zuzuführen, dadurch gekennzeichnet, daß der manipulierbare Roboter (13) pendelartigen Typs mit mindestens sechs Achsen ist, und oberhalb der geschlossenen Box (10) angebracht ist, in der Art, daß die Endbearbeitungseinheit mit einer Vorrichtung zur automatischen Kompensation des Verschleißes des Endbearbeitungswerkzeuges ausgestattet ist.

2. Maschine gemäß Anspruch 1, dadurch gekennzeichnet, daß die Vorrichtung zur automatischen Kompensation des Verschleißes des Endbearbeitungswerkzeuges einen beweglichen Support trägt, auf dem das Endbearbeitungswerkzeug montiert ist, sowie einen Verschleißdetektor dieses Werkzeuges, sowie ein Motororgan (93), das mit dem beweglichen Support verbunden ist, um seine Bewegung zu ermöglichen, sowie einer Einrichtung zur Steuerung der Bewegung dieses beweglichen Supports in Abhängigkeit vom Verschleiß des Endbearbeitungswerkzeuges.

3. Maschine gemäß Anspruch 2, dadurch gekennzeichnet, daß der Verschleißdetektor des Verschleißes des Endbearbeitungswerkzeuges ein Zähler ist, dazu bestimmt, die Anzahl der Werkstücke, die der Endbearbeitung mittels des genannten Werkzeuges zugeführt werden, zu zählen, wobei die Mittel zur Steuerung der Bewegung des beweglichen Supports so angebracht sind, daß sie das mit dem Support verbundene Mototorgan (92) in Gang zu setzen, sobald die Anzahl der bearbeiteten Werkstücke einen vorbestimmten Wert erreicht.

4. Maschine gemäß Anspruch 2, dadurch gekennzeichnet, daß der Verschleißdetektor (92) des Verschleißes am Endbearbeitungswerkstück dazu bestimmt ist, die Stärke des Versorgungsstroms eines elektrischen Antriebsmotors (91) dieses Werkzeuges zu messen, wobei die Mittel zur Steuerung der Bewegung des beweglichen Supports dazu bestimmt sind, das mit dem Support verbundene Mototorgan (93) zu aktivieren, sobald ein Abfall der Stromstärke des Versorgungsstromes festgestellt wird.

5. Maschine gemäß Anspruch 2, dadurch gekennzeichnet, daß der bewegliche Support des Endbearbeitungswerkzeuges mindestens eine Führung (94) aufweist, dazu bestimmt, das Werkzeug in einer ersten Achse zu verschieben, dadurch, daß das mit dem beweglichen Support verbundene Mototorgan einen elektrischen Motor afuweist, der eine Spindel antreibt, die in einer starren Mutter steckt, die eine Einneit mit dem Sockel (80), der mit der Box verbunden ist, bildet.

6. Maschine gemäß Anspruch 2, dadurch gekennzeichnet, daß der bewegliche Support des Endbearbeitungswerkzeuges eine Führung (83) aufweist, dazu bestimmt, dieses Werkzeug in einer zweiten Achse, die rechtwinklig zur genannten ersten Achse ist, zu bewegen.

7. Maschine gemäß Anspruch 6, dadurch gekennzeichnet, daß die Führung, die zur Verschiebung des Werkzeugs auf der zweiten Achse dient, mit einem ersten elektrischen Motor (84) verbunden ist, der dazu dient, das genannte Werkzeug auf der genannten Achse zu verschieben, sowie einem zweiten elektrischen Motor (85), der zur rotativen Verschiebung des genannten Werkzeuges um diese Achse dient.

8. Maschine gemäß Anspruch 1, bestehend aus mehreren Endbearbeitungseinheiten, dadurch gekennzeichnet, daß jede Endbearbeitungseinheit mit einer Staubabsauganlage verbunden ist.

9. Maschine gemäß Anspruch 8, dadurch gekennzeichnet, daß sie aus mindestens einer Kontrolleinheit (15) für den Zustand der Oberfläche der Werkstücke nach ihrer Behandlung durch die verschiedenen Endbearbeitungseinheiten besteht.

10. Maschine gemäß Anspruch 9, dadurch gekennzeichnet, daß diese Kontrolleinheit ein Spektrometer ist.

11. Maschine gemäß Anspruch 1, bestehend aus mindestens einer Bandschleifeinrichtung, dadurch gekennzeichnet, daß diese Einheit aus zwei parallelachsigen Führungs- und Druckrollen besteht, wobei jede der Rollen eine Oberfläche festgelegter Härte aufweist.

12. Maschine gemäß Anspruch 11, dadurch gekennzeichnet, daß die Schleifeinheit aus mindestens einer geraden oder gewölbten Abdeckung besteht, die hinter dem Schleifband befestigt ist.

13. Maschine gemäß Anspruch 1, bestehend aus mindestens einer Poliereinheit, dadurch gekennzeichnet, daß diese Poliereinheit mit mindestens einer Spritzpistole (44) für Polierpaste ausgestattet ist, bestehend aus einer Reguliereinrichtung für die Mengen der eingespritzten Paste bei jedem Strahl, sowie einer Betätigungseinrichtung um die Frequenz der Strahlen der von der Pistole ausgestoßenen Paste festzulegen.

14. Maschine gemäß Anspruch 13, dadurch gekennzeichnet, daß die Betätigungseinrichtungen zur Festlegung der Frequenz der Strahlen in einer Zentraleinheit zur Verarbeitung der gegebenen Werte integriert sind, die die Programmierung des programmierbaren manipulierbaren Roboters (13) und die Einrichtung zur Steuerung der Bewegungen des beweglichen Supports des Endbearbeitungswerkzeugs beinhaltet.

FIG. 1

FIG. 2

FIG. 3

FIG. 4

FIG. 5

*FIG. 6*

*FIG. 7B*

*FIG. 7A*

*FIG. 8*